**Europäisches Patentamt**

**European Patent Office**

**Office européen des brevets**

(11) Veröffentlichungsnummer: **0 205 858**
**B1**

(12) **EUROPÄISCHE PATENTSCHRIFT**

(45) Veröffentlichungstag der Patentschrift:
28.03.90

(21) Anmeldenummer: 86106317.0

(22) Anmeldetag: 09.05.86

(51) Int. Cl.⁴: **H01B 3/30, C08G 18/80**

(54) Hitzehärtbarer Schmelzklebelack, dessen Herstellung und Verwendung.

(30) Priorität: **17.05.85 DE 3517753**

(43) Veröffentlichungstag der Anmeldung:
**30.12.86 Patentblatt 86/52**

(45) Bekanntmachung des Hinweises auf die Patenterteilung:
**28.03.90 Patentblatt 90/13**

(84) Benannte Vertragsstaaten:
**AT BE CH DE FR GB IT LI NL SE**

(56) Entgegenhaltungen:
**DE-A- 1 644 813**
**DE-B- 1 100 849**
**DE-C- 932 454**
**FR-A- 2 398 767**
**GB-A- 2 037 788**
**NL-A- 6 400 042**
**US-A- 2 450 940**

(73) Patentinhaber: **Dr. Beck & Co. AG,**
**Grossmannstrasse 105 Postfach 28 01 80,**
**D-2000 Hamburg 28(DE)**

(72) Erfinder: **Reiter, Udo, Dr., Reger-Strasse 22,**
**D-4404 Teltge(DE)**
Erfinder: **Oslowski, Hans-Josef, Dr., Maxdorfer**
**Strasse 57, D-6700 Ludwigshafen 29(DE)**
Erfinder: **Reimann, Horst, Dr., Adelheidstrasse 26,**
**D-6520 Worms 1(DE)**
Erfinder: **Lehmann, Helmut, Hasenstieg 5,**
**D-2057 Reinbek(DE)**

(74) Vertreter: **Welzel, Gunther, Dr. et al, c/o BASF**
**Aktiengesellschaft Carl-Bosch-Strasse 38,**
**D-6700 Ludwigshafen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft hitzehärtbare Schmelzklebelacke (Backlacke) und deren Verwendung für die Herstellung hochwärmebeständiger Drahtwicklungen, insbesondere für die Herstellung thermischund mechanisch beanspruchbarer Wickelkörper (Spulen) aus lackisolierten Drähten, deren Windungen mittels interner (Stromwärme) oder externer Wärmezufuhr durch Schmelzen und nachfolgendes Verfestigen einer solchen Backlackschicht miteinander verbacken werden.

Basis des erfindungsgemäßen Schmelzklebelacks bilden Lösungen von Polyamiden, denen wahlweise Polyhydantoinharze, Polyamidimide, Polyesterimide und/oder Polyester zugesetzt werden können.

Zum Einsatz als Backlack sind seit längerem zwei verschiedene Typen von Materialien bekannt: thermoplastische und duromere Systeme.

Die Verwendung thermoplastischer Polymerer ist beispielsweise in den DE-OS 23 18 664 und DE-OS 23 41 191 beschrieben. Dem Vorteil ausgezeichneter Wickelfestigkeit stehen bei den bisher bekannten und kommerziell erhältlichen Systemen als wesentliche Nachteile die niedrigen Wiedererweichungstemperaturen, die geringen und damit unwirtschaftlichen Festkörpergehalte und die starke Lösungsmittelempfindlichkeit gegenüber. Diese Nachteile sind insbesondere im Motoren- und Transformatorenbau von gravierender Bedeutung.

Duromersysteme, die beim Verbacken aus einem plastischen B-Zustand mittels chemischer Vernetzung in den ausgehärteten C-Zustand übergehen, sind Gegenstand beispielsweise der GB-PS 1 424 743 und der US-PS 3 657 177.

Aus der DE-B 1 100 849 sind organische Lacklösungen aus Polyamid und verkapptem Diisocyanat bekannt.

Die bisher bekannten und kommerziell erhältlichen Komponentenkombinationen und Vernetzungsprinzipien führen jedoch zu Backlacken mit geringer mechanischer Festigkeit bzw. zu Wiedererweichungstemperaturen, die den Ansprüchen des Marktes in keiner Weise gerecht werden. Die bisher verwendeten hohen Verbackungstemperaturen schränken die Verwendung wegen der thermischen Empfindlichkeit der Nutisolationsmaterialien weiter ein.

Ziel der vorliegenden Erfindung ist es, neue Schmelzklebelacke aufzuzeigen, die diese Nachteile nicht aufweisen.

Überraschenderweise wurde gefunden, daß eine Kombination von thermoplastischem, jedoch im Gegensatz zu den gebräuchlichen technischen Polyamid-Kunststoffen durch Aminüberschuß aminofunktionalisiertem Polyamid mit geringen Mengen eines Isocyanatvernetzers, ggf. unter Zusatz eines Polyhydantoins, Polyamidimids, Polyesters und/oder Polyesterimids sowohl ausgezeichnete mechanische Eigenschaften vor der Verbackung als auch nach der Verbackung im Vergleich zum technischen Standard deutlich höhere Wiedererweichungstemperaturen und Verbackungsfestigkeiten aufweist.

Die Erfindung ist in den Ansprüchen 1–5 angegeben.

Bevorzugt sind hierbei aminofunktionalisierte Polyamide mit mittleren Molekulargewichten $\overline{M}_n$ zwischen 4000 und 25000, sowie Di- und/oder Polyisocyanate, die mit wasserstoffaktiven Verbindungen, wie beispielsweise Phenol, verkappt sind.

Ein Verfahren zur Herstellung hitzehärtbarer Schmelzklebelacke auf Basis einer Lösung von Polyamid in organischen Lösungsmitteln, die gegebenenfalls zusätzlich Polyhydantoin, Polyamidimid, Polyester und/oder Polyesterimid enthalten, ist dadurch gekennzeichnet, daß aus für die Herstellung von Polyamiden mit reduzierter Kristallinität üblichen Ausgangsstoffen aminofunktionalisierte Polyamide, die 50 bis 1000 mval/kg Aminogruppen enthalten und ein mittleres Molekulargewicht $\overline{M}_n$ zwischen 4000 und 25000 aufweisen hergestellt werden und diese mit einem Zusatz von verkapptem Di- oder Polyisocyanat sowie gegebenenfalls Polyhydantoin, Polyamidimid, Polyester und/oder Polyesterimid versehen werden.

Nach diesem Verfahren wird vorzugsweise ein Gemisch hergestellt, das im wesentlichen besteht aus

(a) 40 bis 98 Gew.% eines aminofunktionalisierten Polyamids,
(b) 2 bis 20 Gew.% mindestens eines verkappten Di- oder Polyisocyanats und
(c) 0 bis 60 Gew.% eines Polyhydantoins

mit der Maßgabe, daß die Summe der unter (a) bis (c) genannten Prozentzahlen 100 ist und dieses Gemisch aus (a) bis (c) in mindestens einem organischen Lösungsmittel gelöst ist.

Gegenstand der vorliegenden Erfindung ist auch die Verwendung der erfindungsgemäßen Schmelzklebelacke zur Herstellung hochwärmebeständiger Drahtwicklungen, wobei mit wärmebeständigem Elektroisolierlack überzogene Drähte mit Schmelzklebelack beschichtet werden, die Beschichtung getrocknet, dann die Wicklung hergestellt, die Beschichtung unter Wärmezufuhr geschmolzen und ausgehärtet wird, so daß die einzelnen Drähte der Wicklung untereinander fest verbacken.

Die Applikation der erfindungsgemäßen Schmelzklebelacke (Backlacke) kann auf konventionellen Lackieranlagen und mit üblichen Applikationssystemen erfolgen.

Zur Herstellung der erfindungsgemäßen Backlacke löst man zweckmäßigerweise (a) aminofunktionalisiertes Polyamid, gegebenenfalls mit einem Zusatz von (c) Polyhydantoin-, Polyamidimid-, Polyester- und/oder Polyesterimidharz, sowie (b) ein verkapptes Di- oder Polyisocyanat in einem organischen Lösungsmittel oder Lösungsmittelgemisch.

Der Feststoffgehalt dieser Lösungen kann zwischen 10 und 30 Gew.% der Gesamtmenge der Komponenten (a) bis (c) schwanken; bevorzugt sind Lösungen mit 13 bis 20 Gew.% der Summe der Komponenten (a) bis (c).

Bezogen auf den Harzfeststoffgehalt sind die Komponenten (a) bis (c) im allgemeinen in folgenden Mengen vorhanden:

40 bis 98, vorzugsweise 40 bis 90 Gew.%, aminofunktionalisiertes Polyamid (a),
2 bis 20, vorzugsweise 3 bis 10 Gew.%, verkapptes Di- oder Polyisocyanat (b),
0 bis 60, vorzugsweise 20 bis 50 Gew.%, thermostabiles Harz, vorzugsweise Polyhydantoin,
wobei die Summe der prozentualen Anteile der Komponenten (a) bis (c) 100 ist.

Zu den Aufbaukomponenten der erfindungsgemäßen Schmelzklebelacke ist im einzelnen folgendes auszuführen.

(a) Aminofunktionalisierte Copolyamide im Sinne der Erfindung sind solche mit 50 bis 1000 mval/kg Aminoendgruppen und verminderter Kristallinität, die aus Lactamen, Dicarbonsäuren mit 6 bis 10 Kohlenstoffatomen und Diaminen mit 6 bis 10 Kohlenstoffatomen und gegebenenfalls einer der Copolyamidkomponenten 2,2,4-Trimethylhexamethylen-1,6-diamin, Isophorondiamin, 4,4'-Diaminodicyclohexylmethan, 3,3'-Dimethyl-4,4'-diaminodicyclohexylmethan aufgebaut sind. Die Kristallisation läßt sich bekanntlich durch Cokondensation verschiedener Lactame, wie Caprolactam oder Laurinlactam, Aminosäuren, wie z.B. $\omega$-Aminoundecansäure oder $\omega$-Aminocapronsäure und/oder Diamine, wie z.B. solche mit 6 bis 10 Kohlenstoffatomen wie Hexamethylendiamin bzw. Dicarbonsäuren mit 6 bis 10 Kohlenstoffatomen, wie z.B. Adipinsäure oder Sebacinsäure sowie durch Einbau sperriger Monomerer, wie 2,2,4-Trimethylhexamethylen-1,6-diamin, Isophorondiamin, 4,4'-Diaminodicyclohexylmethan, 3,3'-Dimethyl-4,4'-di-aminodicyclohexylmethan u.ä. reduzieren.

Bei der Bestimmung der Amino-Endgruppen der Polyamide durch Titration sollte ein Wert von 50 bis 1000, bevorzugt 80 bis 500 mval/kg Amino-Gruppen erreicht werden.

Diese Aminofunktionalität kann während der Kondensation der Polyamide eingestellt werden, indem ein entsprechender Überschuß an mono- oder polyfunktionellen Aminen wie Stearylamin oder bevorzugt Hexamethylendiamin eingesetzt wird.

Die Herstellung der erfindungsgemäß einzusetzenden aminofunktionalisierten Polyamide erfolgt durch Kondensation der Ausgangsstoffe nach den dafür üblichen Verfahren, z.B. Vorkondensation der Schmelze in Gegenwart von wenig Wasser im geschlossenen System, dann Nachkondensation im offenen System unter Abführung des Wassers. Die gewünschten Molekulargewichte lassen sich über die Stöchiometrie und gegebenenfalls Mitverwendung monofunktioneller Verbindungen einstellen.

Als Beispiel für ein geeignetes Polyamid ist eines aus 60 Gew.-Teilen AH-Salz und 40 Gew.-Teilen Caprolactam zu nennen. Durch einen Überschuß an Hexamethylendiamin kann dann beispielsweise eine Amino-Endgruppenkonzentration von 192 mval/kg eingestellt werden. Die relative Viskosität betrug in diesem Falle 1,9, gemessen im Kapillarviskosimeter an einer 1 %igen Lösung in konz. Schwefelsäure.

(b) Als verkappte Di- und/oder Polyisocyanate kommen solche in Frage, deren Isocyanatgruppen mit einer H-aktiven, wie z.B. einer CH-, OH- oder NH-aciden Verbindung, wie z.B. Methylethylketoxim, Caprolactam oder Phenol, verkappt sind, wie z.B. Toluylen-2,4- und/oder -2,6-diisocyanat, Hexamethylen-1,6-diisocyanat, Isophorondiisocyanat, Reaktionsprodukte aus Toluylendiisocyanat und einem Polyalkoholgemisch (z.B. Desmodur® AP der Fa. Bayer AG) oder trimerisiertes Toluylen-2,4-diisocyanat, die jeweils entsprechend verkappt sind. Als Verkappungsmittel bevorzugt sind $\epsilon$-Caprolactam und Phenol.

(c) Unter den gegebenenfalls mitzuverwendenden thermostabilen Harzen (c) sind Polyhydantoinharze bevorzugt. Geeignete Polyhydantoinharzkomponenten sind z.B. in den DE-PS 1 570 552 sowie DE-OS 2 054 602 beschrieben, beispielsweise Resistherm® PH 30. Geeignete Polyamidimide sind z.B. in der US-PS 3 260 691, geeignete Polyester z.B. in den DE-PS 1 033 291 sowie DE-PS 1 199 909, geeignete Polyesterimide z.B. in der DE-AS 1 445 263 sowie in der US-PS 3 426 098 beschrieben.

Als Lösungsmittel können die bei der Lackherstellung üblichen verwendet werden, vorzugsweise phenolische Lösungsmittel, wie Kresole und Xylenole, N-Methylpyrrolidon, Dimethylformamid, gegebenenfalls unter Zusatz aromatischer Kohlenwasserstoffe, wie Xylol, oder deren Gemischen, wie Solvesso 100.

Die Applikation der erfindungsgemäßen Backlacke erfolgt im allgemeinen auf Drähte aus Kupfer, Kupferlegierungen oder Aluminium, die mit einer Isolierschicht aus üblicherweise für die Elektroisolierung verwendeten hochtemperaturbeständigen Harzen, wie Polyesterimiden, Polyestern oder Zweischichtkombinationen aus Polyestern und Polyamiden überzogen sind. Die isolierten Drähte werden zur Trocknung der einzelnen Backlackschichten bei Einbrenntemperaturen um 300°C und geeigneter Lackiergeschwindigkeit lackiert. Man erhält auf diese Weise wickelfeste und lagerstabile Backlackdrähte, die - zu entsprechenden Spulenkörpern gewickelt - bei 170 bis 210°C z.B. durch Heißluft oder durch Erhitzen der Spule mittels elektrischen Stroms in kurzer Zeit verbacken werden. Man erhält auf diese Weise unter milderen Bedingungen, als es bisher Stand der Technik war, formstabile, wärmebeständige Spulen mit ebenfalls deutlich angehobenen Wiedererweichungstemperaturen und Verbackungsfestigkeiten.

Die in den Beispielen angegebenen Teile und Prozente sind Gewichtsteile und Gewichtsprozente.

Beispiel 1

Es werden 56,5 Teile Xylenol 50 (= technisches Xylenolisomerengemisch) vorgelegt und 14 Teile eines aminofunktionalisierten Polyamids, hergestellt nach einem üblichen Kondensationsverfahren aus 34 Teilen AH-Salz, 29 Teilen Caprolactam, 22 Teilen 4,4'-Diaminodicyclohexylmethan und 15 Teilen Adipinsäure, das eine $NH_2$-Zahl von 192 mval/kg aufweist, sowie 4 Teile Polyhydantoin (z.B. Resistherm PH30) zugegeben, auf 100°C erwärmt und solange bei dieser Temperatur gerührt, bis alles gelöst ist. Nach Zugabe von 23,5 Teilen Solvesso 100 wird auf 50°C abgekühlt, 2 Teile phenolverkapptes Polyisocyanat (z.B. Desmodur AP), zugefügt und filtriert.

Durch Zugabe von Xylenol/Solvesso 2,4:1 wird eine Lackierviskosität von 78 DIN sec (FORD-Becher 4) bei einem Feststoffgehalt von 14,5 % eingestellt.

Mit diesem so hergestellten Lack wurde ein mit einem handelsüblichen Polyesterimid-Untercoat beschichteter 0,5 mm Cu-Draht auf einer üblichen Drahtlackiermaschine lackiert (Ofenlänge 2,50 m, Ofentemperatur 320/340°C). Eine verbackene Wickellocke zeigte folgende, nach DIN 46 435 bestimmte Eigenschaften:
Wiedererweichungstemperatur:
nach Verbackung bei 30 Minuten/180°C: 193°C
nach Verbackung bei 30 Minuten/200°C: 207°C.

Beispiel 2

Es wird wie in Beispiel 1 angegeben gearbeitet, jedoch werden 13 % des aminofunktionalisierten Polyamids mit 4 % Resistherm PH30 und 3 % Desmodur AP kombiniert.

Die - wie in Beispiel 1 beschrieben - erhaltene Wickellocke zeigt bei der Prüfung nach DIN 46 435 folgende Eigenschaften:
Wiedererweichungstemperatur:
nach Verbackung bei 30 Minuten/180°C: 193°C
nach Verbackung bei 30 Minuten/200°C: 200°C.

Vergleichsbeispiel

Zum Vergleich wurde ein handelsüblicher thermoplastischer Backlack auf Polyamidbasis entsprechend DIN 46 435 geprüft:
Wiedererweichungstemperatur:
nach Verbackung bei 30 Minuten/180°C: 150°C
nach Verbackung bei 30 Minuten/200°C: 157°C.

## Patentansprüche

1. Hitzehärtbarer Schmelzklebelack auf Basis einer Lösung von Polyamid und verkapptem Di- oder Polyisocyanat in organischen Lösungsmitteln, die gegebenenfalls zusätzlich Polyhydantoin, Polyamidimid, Polyester und/oder Polyesterimid enthält, dadurch gekennzeichnet, daß der Schmelzklebelack als Polyamid ein Copolyamid mit 50 bis 1000 mval/kg Aminoendgruppen und verminderter Kristallinität enthält, das aus Lactamen, Dicarbonsäuren mit 6 bis 10 Kohlenstoffatomen und Diaminen mit 6 bis 10 Kohlenstoffatomen und gegebenenfalls einer der Copolyamidkomponenten 2,2,4-Trimethylhexamethylen-1,6-diamin, Isophorondiamin, 4,4'-Diaminodicyclohexylmethan, 3,3'-Dimethyl-4,4'-diaminodicyclohexylmethan aufgebaut ist.

2. Schmelzklebelack nach Anspruch 1, dadurch gekennzeichnet, daß das Copolyamid ein mittleres Molekulargewicht $M_n$ zwischen 4000 und 25 000 aufweist.

3. Schmelzklebelack nach einem der vorhergehenden Ansprüche, dadurch gekennzeichnet, daß der Schmelzklebelack im wesentlichen besteht aus einem Gemisch aus

a) 40 bis 98 Gew.-% Copolyamid,

b) 2 bis 20 Gew.-% mindestens eines verkappten Di- oder Polyisocyanats und

c) 0 bis 60 Gew.-% eines Polyhydantoins

mit der Maßgabe, daß die Summe der unter a) bis c) genannten Prozentzahlen 100 ist und dieses Gemisch aus a) bis c) in mindestens einem organischen Lösungsmittel gelöst ist.

4. Schmelzklebelack nach einem der vorhergehenden Ansprüche, dadurch gekennzeichnet, daß das verkappte Di- oder Polyisocyanat (b) ein mit einer CH-, OH- oder NH-aciden organischen Verbindung verkapptes Di- oder Polyisocyanat ist.

5. Verwendung des Schmelzklebelacks nach einem der vorhergehenden Ansprüche zur Herstellung hochwärmebeständiger Drahtwicklungen durch Beschichtung von mit wärmebeständigem Elektroisolierlack beschichteten Drähten mit Schmelzklebelack, Trocknung der Beschichtung und Herstellung einer Wicklung. Schmelzen der Beschichtung unter Wärmezufuhr und Aushärten, wodurch die einzelnen Drähte der Wicklung untereinander fest verbacken werden.

## Claims

1. A heat-curable self-bonding enamel based on a solution of a polyamide and a blocked di- or polyisocyanate in an organic solvent which may additionally contain a polyhydantoin, a polyamidoimide, a polyester or a polyesterimide, wherein the self-bonding enamel contains, as the polyamide, a copolyamide having from 50 to 1000 meq/kg of terminal amino groups and reduced crystallinity and composed of a lactam, a dicarboylic acid of 6 to 10 carbon atoms, a diamine of 6 to 10 carbon atoms with or without one of the copolyamide components 2,2,4-trimethylhexamethylene-1,6-diamine, isophoronediamine, 4,4'-diamino-dicyclohexylmethane and 3,3'-dimethyl-4,4'-diamino-dicyclohexylmethane.

2. A self-bonding enamel as claimed in claim 1, wherein the copolyamide has a mean molecular weight $M_n$ of from 4000 to 25,000.

3. A self-bonding enamel as claimed in either of the preceding claims, which consists essentially of a mixture of

a) from 40 to 98% by weight of a copolyamide,

b) from 2 to 20% by weight of one or more blocked di- or polyisocyanates and

c) from 0 to 60% by weight of a polyhydantoin, with the proviso that the sum of the percentages stated under a) to c) is 100, and this mixture of a) to c) is dissolved in one or more organic solvents.

4. A self-bonding enamel as claimed in any one of the preceding claims, wherein the blocked di- or polyisocyanate (b) is a di- or polyisocyanate blocked with an acidic CH, OH or NH organic compound.

5. The use of the self-bonding enamel as claimed in any one of the preceding claims for the production of highly heat-resistant wire windings, by coating a wire coated with a heat-resistant enamel, with a self-bonding enamel, drying the coating and producing a winding and melting and curing the coating by supplying heat, with the result that the individual wires of the winding are firmly bonded to one another.

**Revendications**

1. Laque adhésive fusible durcissable à chaud à base d'une solution de polyamide et de di- ou polyisocyanate masqué dans des solvants organiques, solution qui, le cas échéant, contient en plus une polyhydantoïne, un polyamidimide, un polyester et/ou un polyesterimide, caractérisée en ce qu'elle contient, en tant que polyamide, un copolyamide comportant 50 à 1000 mval/kg de groupements amino terminaux et ayant une cristallinité réduite, qui est formé à partir de lactames, d'acides dicarboxyliques à 6–10 atomes de carbone, de diamines à 6–10 atomes de carbone et éventuellement d'un des composants de copolyamide 2,2,4-triméthylhexaméthylène-1,6-diamine, isophoronediamine, 4,4'-diaminodicyclohexylméthane et 3,3'-diméthyl-4,4'-diaminodicyclohexylméthane.

2. Laque adhésive fusible selon la revendication 1, caractérisée en ce que le copolyamide présente un poids moléculaire moyen Mn entre 4000 et 25 000.

3. Laque adhésive fusible selon la revendication 1 ou 2, caractérisée en ce qu'elle se compose essentiellement d'un mélange de
a) 40 à 98% en poids de copolyamide,
b) 2 à 20% en poids d'au moins un di- ou polyisocyanate masqué et
c) 0 à 60% en poids d'une polyhydantoïne, étant spécifié que la somme des pourcentages mentionnés en a) à c) est égale à 100 et que ce mélange de a) à c) est dissous dans au moins un solvant organique.

4. Laque adhésive fusible selon l'une quelconque des revendications 1 à 3, caractérisée en ce que le di- ou polyisocyanate masqué (b) est un di- ou polyisocyanate masqué par un composé organique à groupement CH-, OH- ou NH-acide.

5. Utilisation de la laque adhésive fusible selon l'une quelconque des revendications 1 à 4 pour la fabrication d'enroulements en fils à haute résistance à la chaleur par enduction de fils revêtus de laque d'isolation électrique résistante à la chaleur avec de la laque adhésive fusible, séchage de l'enduit et confection d'un enroulement, fusion de l'enduit par apport de chaleur et durcissement, d'où il résulte que les fils individuels de l'enroulement sont unis entre eux par cuisson.